# EUROPEAN PATENT APPLICATION

(11) **EP 4 567 600 A2**
(43) Date of publication of application: **11.06.2025**
(21) Application number: 24218022.2
(22) Date of filing: 06.12.2024
(51) Int. Cl.: G06F 9/50, G06F 11/14, G06F 11/16

(54) **METHOD FOR PROCESSING SERVICE BASED ON CHIP, APPARATUS, STORAGE MEDIUM AND ELECTRONIC DEVICE**

(30) Priority: 29.08.2024 CN 202411204552
(71) Applicant: XG TECH PTE. LTD., Singapore 179098 (SG)
(72) Inventor: YU, Jianfeng, 179098 Singapore (SG)
(74) Representative: Patentanwälte Magenbauer & Kollegen Partnerschaft mbB

(57) **Abstract**

The embodiments of the present disclosure disclose a method for processing a service based on a chip, apparatus, storage medium and electronic device. The chip includes: determining a first service meeting a second functional safety level having a level higher than that of the first functional safety level; determining first data to be processed corresponding to the first service; performing operations on the first data to be processed by the at least two subsystems, respectively, to obtain first operation results respectively corresponding to the at least two subsystems; determining a matching relationship between the first operation results respectively corresponding to the at least two subsystems; and processing the first service based on the matching relationship. Embodiments of the present disclosure are able to support high functional safety level and more complex services with great computility of a hardware with a low functional safety level.

## Description

### FIELD OF THE PRESENT DISCLOSURE

The present disclosure relates to functional safety technology, and more particularly, to a method for processing a service based on a chip, an apparatus, a storage medium and an electronic device.

### BACKGROUND OF THE PRESENT DISCLOSURE

Functional safety generally refers to avoiding unacceptable risk caused by system functional failure. In the driving field, there are a variety of functional safety level services. At present, high functional safety level services generally need to be implemented through a dedicated chip, but the performance of the dedicated chip is poor, which cannot support high functional safety level and more complex services.

### SUMMARY OF THE PRESENT DISCLOSURE

The present disclosure provides a method for processing a service based on a chip, apparatus, storage medium, and electronic device to support a high-function safety level service through a hardware with a low-function safety level, thereby supporting high functional safety level and more complex services with great computility of the hardware with the low functional safety level.

According to an aspect of an embodiment of the present disclosure, a method for processing a service based on a chip is provided, the chip including at least two subsystems meeting a first functional safety level, the method including:
determining a first service meeting a second functional safety level having a level higher than that of the first functional safety level;
determining first data to be processed corresponding to the first service;
performing operations on the first data to be processed by the at least two subsystems, respectively, to obtain first operation results respectively corresponding to the at least two subsystems;
determining a matching relationship between the first operation results respectively corresponding to the at least two subsystems; and
processing the first service based on the matching relationship.

According to an aspect of an embodiment of the present disclosure, an apparatus for processing a service based on a chip is provided, the chip including: at least two subsystems meeting a first functional safety level, the apparatus including:
a first determination module configured to determine a first service meeting a second functional safety level having a level higher than that of the first functional safety level;
a second determination module configured to determine first data to be processed corresponding to the first service determined by the first determination module;
a first operation module configured to perform operations on the first data to be processed determined by the second determination module by the at least two subsystems, respectively, to obtain first operation results respectively corresponding to the at least two subsystems;
a third determination module configured to determine a matching relationship between the first operation results respectively corresponding to the at least two subsystems obtained by the first operation module; and
a first processing module configured to process the first service determined by the first determination module based on the matching relationship determined by the third determination module.

According to still another aspect of the embodiments of the present disclosure, a computer-readable storage medium storing thereon a computer program for executing the above method for processing a service based on a chip is provided.

According to yet another aspect of an embodiment of the present disclosure, an electronic device is provided, which includes:
a processor;
a memory for storing processor-executable instructions,
wherein the processor is configured for reading the executable instructions from the memory and executing the instructions to implement the method for processing a service based on a chip.

According to yet another aspect of an embodiment of the present disclosure, a computer program product is provided which, when instructions in the computer program product are executed by a processor, causes the processor to perform the method for processing a service based on a chip described above.

Based on the method for processing a service based on a chip, apparatus, storage medium, electronic device and program product provided by the above-mentioned embodiments of the present disclosure, for a first service meeting a second functional safety level, operations maybe performed on the first data to be processed corresponding to the first service by at least two subsystems in a chip, respectively, and the first operation results respectively corresponding to at least two subsystems may be obtained. Based on the matching relationship between the first operation results respectively corresponding to at least two subsystems, a suitable processing method can be used to process the first service. For example, if the matching relationship is configured for characterizing that each of the N first operation results has good consistency, it can be guaranteed that the first service is normally completed using this processing method. If the matching relationship is used to characterize that each of the N first operation results does not have good consistency, the safety of the vehicle to which the chip belongs can be ensured using this processing method. It should be noted that one safety requirement can be partitioned into two redundant safety requirements. For example, ASIL-D can be decomposed into ASIL-B (D) and ASIL-B (D). As another example, ASIL-D can be decomposed into ASIL-C (D) and ASIL-A (D). In the embodiments of the present disclosure, at least two subsystems in a chip comply with a low functional safety level, and the chip complies with a low functional safety level, for example, ASIL-B; however, at least two subsystems in the chip can make a backup with each other for realizing redundancy, thereby enabling the chip to support services with a high functional safety level, for example, ASIL-D services. That is, in the embodiments of the present disclosure, a service with a high functional safety level can be supported by a hardware with a low functional safety level, and it thus may be implemented to support high functional safety level and more complex services through great computility of a hardware with a low functional safety level.

### BRIEF DESCRIPTION OF THE DRAWINGS

FIG. 1 is a schematic flow diagram showing a method for processing a service based on a chip according to some example embodiments of the present disclosure.
FIG. 2 is a schematic flow diagram showing a method for performing operation on first data to be processed respectively by at least two subsystems according to some example embodiments of the present disclosure.
FIG. 3 is a schematic flow diagram showing a method for processing a service based on a chip according to further example embodiments of the present disclosure.
FIG. 4 is a schematic flow diagram showing a method of performing operation on second data to be processed by a second processor in a target subsystem according to some example embodiments of the present disclosure.
FIG. 5 is a schematic flow diagram showing a method of determining a matching relationship between respective first operation results of at least two subsystems according to some example embodiments of the present disclosure.
FIG. 6A is a schematic structural diagram of a chip according to some example embodiments of the present disclosure.
FIG. 6B is a schematic structural diagram of a chip according to further example embodiments of the present disclosure.
FIG. 6C is a schematic structural diagram of a chip according to further example embodiments of the present disclosure.
FIG. 7 is a schematic structural diagram of an apparatus for processing a service based on a chip according to some example embodiments of the present disclosure.
FIG. 8 is a schematic structural diagram of a first operation module according to some example embodiments of the present disclosure.
FIG. 9 is a schematic structural diagram of an apparatus for processing a service based on a chip according to further example embodiments of the present disclosure.
FIG. 10 is a schematic structural diagram of a second operation module according to some example embodiments of the present disclosure.
FIG. 11 is a schematic structural diagram of a third determination module according to some example embodiments of the present disclosure.
FIG. 12 is a schematic structural diagram of an electronic device according to some example embodiments of the present disclosure.
FIG. 13 is a schematic structural diagram of a chip according to some example embodiments of the present disclosure.

### DESCRIPTION OF THE EMBODIMENTS

In order to explain the present disclosure, example embodiments of the present disclosure will be described in detail below with reference to the accompanying drawings. It is apparent that the described embodiments are only a part of the embodiments of the present disclosure, not all of them, and it should be understood that the present disclosure is not limited to the example embodiments.

It should be noted that the relative arrangement of parts and steps, numerical expressions and numerical values set forth in these examples do not limit the scope of the present disclosure unless specifically stated otherwise.

### Application Overview

In the driving field, there are a variety of functional safety level services. For example, the road vehicle functional safety standard ISO 26262 defines the Automotive Safety Integration Level (ASIL) as the following five functional safety levels: Quality Management (QM), ASIL-A, ASIL-B, ASIL-C and ASIL-D; wherein QM has a level lower than ASIL-A, ASIL-A has a level lower than ASIL-B, which has a level lower than ASIL-C, and ASIL-C has a level lower than ASIL-D.

At present, high functional safety level services generally need to be implemented through a dedicated chip, but the performance of the dedicated chip is poor, which cannot support high functional safety level and more complex services. For example, ASIL-D, a service with a functional safety level (which may also be referred to as an ASIL-D service) needs to be implemented via a dedicated chip, and since the performance of the dedicated chip is poor, the dedicated chip may support a simple ASIL-D service only, but cannot support a relatively complex ASIL-D service, and it is difficult to meet practical requirements.

### Example system

In order to facilitate an understanding of the following method for processing a service based on a chip, a description will first be given of the chips involved in the embodiments of the present disclosure.

Alternatively, the chip referred to in the embodiments of the present disclosure may be a chip dedicated to support intelligent driving functions, and may also be referred to as an intelligent driving-specific chip. The intelligent driving function may include three major parts, i.e., a perception function, a planning function and a control function. With the perception function, it is possible to sense the environment around the vehicle, such as a road, a static object, a dynamic object, etc. Static objects may include, for example, buildings, service lights, etc. Dynamic objects may include, for example, pedestrians, cyclists, other vehicles, etc. With the planning function, it is possible to make a plan according to the mission requirements of the intelligent driving, such as whether to brake, whether to steer, whether to decelerate, etc. or to plan an optimal travel path. With the control function, actuator in the vehicle can be controlled in order to achieve braking, steering and deceleration of the vehicle.

Alternatively, the chip referred to in the embodiments of the present disclosure may include: at least two subsystems meeting a first functional safety level. The first functional safety level may be a lower functional safety level. For example, the first functional safety level may be ASIL-B. For another example, the first functional safety level may be QM. The at least two subsystems may be represented as N subsystems, and N may be an integer greater than or equal to 2. N subsystems meeting the first functional safety level can be understood as: the N subsystems are developed according to the first functional safety level. Each of the N subsystems may be a subsystem for performing data operations to facilitate service processing.

The subsystems described in the present disclosure may also be referred to as hardware units that include at least corresponding hardware capable of implementing functional safety level functions, such as a hardware including processors, memories, peripheral modules, etc. In one example, N may be 2, and each of the N subsystems may include a processor, memory, peripheral modules, etc. The processor may be, for example, a Central Processing Unit (CPU). The memory may be, for example, Double Data Rate Synchronous Dynamic Random Access Memory (DDR) or Static Random Access Memory (SRAM).

In some embodiments, the chip may also include a controller, which may be a small processing-capable chip or device such as a Microcontroller Unit (MCU), etc. In other examples, the MCU may be a controller disposed outside the chip, and embodiments of the present disclosure are not limited to the positional relationship between the chip and the controller, and the following embodiments are exemplified by the chip including the controller.

When processing a task with a high functional safety level, a first processor in at least two hardware units can respectively perform an operation on first data to be processed corresponding to the task with a high level so as to obtain first operation results respectively corresponding to the at least two hardware units; the controller can match the first operation results respectively corresponding to at least two hardware units, and process a task with a high functional safety level based on the matching relationship.

In some examples, after obtaining the first operation results respectively corresponding to the at least two hardware units, a first processor in the at least two hardware units may respectively write the first operation result into the DDR of each of the at least two hardware units, and trigger an interrupt to notify the MCU to read the first operation result in the DDR of each of the at least two hardware units. After the first operation result from the DDR of each of the at least two hardware units are read by the MCU, the first operation results respectively corresponding to each of the at least two hardware units are matched, and the first task is processed based on the matching relationship.

In other examples, after obtaining the first operation results respectively corresponding to the at least two hardware units, a first processor in the at least two hardware units may respectively write the first operation results into an SRAM, and respectively trigger an interrupt to notify the MCU to read the first operation result corresponding to each of the at least two hardware units in the SRAM. After the first operation results corresponding to the at least two hardware units are read from the SRAM by the MCU, the first operation results respectively corresponding to the at least two hardware units are matched, and the first task is processed based on the matching relationship.

### Example method

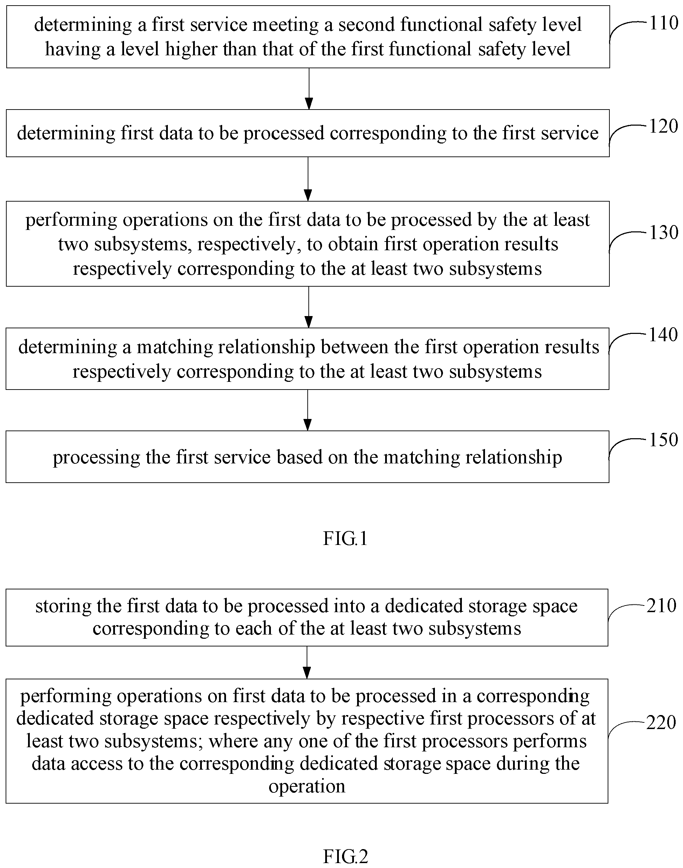

FIG. 1 is a flow diagram showing a method for processing a service based on a chip according to some example embodiments of the present disclosure. The method shown in FIG. 1 may include steps 110, 120, 130, 140, and 150, which may be executed by a chip.

Step 110: determining a first service meeting a second functional safety level having a level higher than that of the first functional safety level.

Alternatively, the second functional safety level may be a higher functional safety level than the first functional safety level. For example, the second functional safety level may be ASIL-C. As another example, the second functional safety level may be ASIL-D.

It should be noted that in the field of driving, there are a plurality of services related to the control of the travel state of the vehicle, which may be a plurality of tasks to be executed while the vehicle is running. The travel state control of the vehicle may include, but is not limited to, control of a travel path, speed, acceleration, etc. of the vehicle, and control of whether the vehicle is braking, steering, etc. The first service meeting the second functional safety level may be a service that requires very strict safety among a plurality of services related to the control of the travel state of the vehicle. If the second functional safety level is ASIL-C, the first service meeting the second functional safety level may also be referred to as ASIL-C service. If the second functional safety level is ASIL-D, the first service of the second functional safety level may also be referred to as ASIL-D service. In one example, the ASIL-D service may be an Automatic Emergency Braking (AEB) service.

In some examples, the first service may also be referred to as a first task having a higher functional safety level than that of at least two subsystems (i.e., at least two hardware units) in the chip.

In some embodiments, the hardware units that process each task may be pre-configured according to the functional safety level of each task. For a task with a higher functional safety level (e.g., a first task), at least two hardware units may be pre-configured to execute the task, so as to ensure that a hardware unit with a low functional safety level can support a high functional safety level and a relatively complex service.

For example, two hardware units, a hardware unit 10 and a hardware unit 20, may be pre-configured for a first task, and when executing the first task, the first data to be processed corresponding to the first task may be operated by a first processor 11 in the hardware unit 10 and a first processor 21 in the hardware unit 20, respectively. By making the two hardware units backup with each other, the chip can be made to support services with a high functional safety level. The embodiments of the present disclosure are not limited to the number of hardware units pre-configured for the first task, and the number of hardware units executing the first task is related to the functional safety level of the first task.

Step 120: determining first data to be processed corresponding to the first service.

Alternatively, the first data to be processed corresponding to the first service may be data required to participate in an operation in order to support the first service. In some examples, the first data to be processed for the first service may be determined by a first processor in at least two hardware units pre-configured for the first task.

In general, the vehicle to which the chip belongs may be provided with sensor devices, including but not limited to Camera, Radar, positioning sensors, etc. As an example, the camera may be a monocular camera or a binocular camera; the radar may be a laser radar or a millimeter wave radar; the positioning sensors may be those based on a Global Navigation Satellite System (GNSS) or a Global Positioning System (GPS). The first data to be processed corresponding to the first service may be data collected by at least part of the sensors in the sensor device. Alternatively, the first data to be processed corresponding to the first service is data obtained after performing certain data processing on data collected by at least part of the sensors in the sensor device.

In one example, taking the first service as an AEB service and pre-configuring at least two hardware units for the AEB service as an example, the image data acquired by the camera and the point cloud data acquired by the radar can be received by a first processor included in each of the at least two hardware units. That is, the first data to be processed corresponding to the first service may include image data acquired by a camera and point cloud data acquired by a radar. Alternatively, the first processor included in each of the at least two hardware units may receive the image data acquired by the camera and the point cloud data acquired by the radar, and fuse the image data acquired by the camera and the point cloud data acquired by the radar to obtain the fusion data. That is, the first data to be processed corresponding to the first service may include fusion data.

Step 130: performing operations on the first data to be processed by the at least two subsystems, respectively, to obtain first operation results respectively corresponding to the at least two subsystems.

Alternatively, the at least two subsystems may be represented as N subsystems. Each of the N subsystems may be configured with M sets of code data. N and M may each be an integer greater than or equal to 2. Each set of code data of the M sets of code data may correspond to a service of the second functional safety level, and each set of code data is configured for characterizing an operation logic of the service to which the set of code data corresponds. The operation logic can be understood as: the manner of data operation that need to be executed to aid to implement service processing, a variety of operation types may be involved in the operation logic, including but not limited to tensor computations, vector computations, etc. As an example, the tensor computation may include a convolution computation. Vector computations may include Elementwise computations. In general, operation logic may be implemented by an algorithm.

Alternatively, for each of the N subsystems, the subsystem may determine code data for characterizing the operation logic corresponding to the first service among the M sets of code data configured in itself, and the determined code data may subsequently be referred to as the first code data for convenience of description. The subsystem may run the first code data to perform an operation on the first data to be processed based on an operation logic corresponding to the first service to obtain a first operation result corresponding to the subsystem. As such, N first operation results corresponding one-to-one to the N subsystems are obtained.

In one example, the first service is an AEB service, and the operation logic corresponding to the AEB service can be: calculating a distance between the vehicle to which the chip belongs and the preceding vehicle based on the first data to be processed; determining a magnitude relationship between the distance and a preset safety distance as a first operation result. Alternatively, the operation logic corresponding to the AEB service can be: calculating a distance between the vehicle to which the chip belongs and the preceding vehicle from the first data to be processed; and calculating a target speed of the vehicle to which the chip belongs (i.e., a speed to which the vehicle, to which the chip belongs, needs to be adjusted), as a first operation result, from the distance and the preset safety distance.

Step 140: determining a matching relationship between the first operation results respectively corresponding to the at least two subsystems.

In some embodiments, after at least two hardware units respectively perform an operation on first data to be processed to obtain first operation results respectively corresponding to the at least two hardware units, the first operation results can be respectively written into a corresponding memory (e.g., an DDR or an SRAM), and an interrupt is triggered to notify a controller (e.g., an MCU) to respectively read the first operation results respectively corresponding to the at least two hardware units in the memory; the controller further determines a matching relationship of the first operation results respectively corresponding to at least two hardware units, and performs corresponding processing on the first service based on the matching relationship.

Alternatively, the N first operation results corresponding to the N subsystems on a one-to-one basis may be compared to obtain a matching relationship. The matching relationship may be used to characterize whether each of the N first operation results has good consistency.

In step 150: processing the first service based on the matching relationship.

Alternatively, the first service may be processed by a processing method adapted to the matching relationship.

If the matching relationship is used to represent that each first operation result in the N first operation results has a better consistency, a first processing method can be used to process the first service; the first processing method may be a processing method capable of ensuring that the first service is normally completed.

For example, in a case where it is determined that the first operation results respectively corresponding to at least two hardware units have good consistency, MCU can control an actuator to execute a corresponding operation so as to ensure that the first service is completes normally.

If the matching relationship is used to represent that each of the N first operation results does not have good consistency, a second processing method can be used to process the first service; the second processing method may be different from the first processing method, and the second processing method may be a processing method capable of ensuring the safety of a vehicle to which the chip belongs.

For example, MCU may control an actuator to execute a preset operation so as to ensure the driving safety of the vehicle in a case where it is determined that the first operation results respectively corresponding to at least two hardware units do not have good consistency.

In the embodiments of the present disclosure, for a first service meeting a second functional safety level, the first operation results respectively corresponding to at least two subsystems can be obtained by at least two subsystems in a chip respectively performing operations on first data to be processed corresponding to the first service. Based on the matching relationship between the first operation results respectively corresponding to at least two subsystems, a suitable processing method can be used to process the first service. For example, if the matching relationship is used for characterizing that each of the N first operation results has good consistency, it can be guaranteed that the first service is normally completed with this processing method. If the matching relationship is used for characterizing that each of the N first operation results does not have good consistency, the safety of the vehicle to which the chip belongs can be ensured with this processing method. It should be noted that one safety requirement can be partitioned into two redundant safety requirements. For example, ASIL-D can be decomposed into ASIL-B (D) and ASIL-B (D). As another example, ASIL-D can be decomposed into ASIL-C (D) and ASIL-A (D). In the embodiments of the present disclosure, at least two subsystems in a chip comply with a low functional safety level, and the chip complies with a low functional safety level, for example, ASIL-B; however, at least two subsystems in the chip can make backup with each other for realizing redundancy, thereby enabling the chip to support services with a high functional safety level, for example, ASIL-D services. That is, in the embodiments of the present disclosure, a service with a high functional safety level can be supported by a hardware with a low functional safety level, and thereby supporting high functional safety level and more complex services through great computility of hardware with a low functional safety level.

FIG. 2 is a schematic flow diagram showing a method for performing operation on first data to be processed respectively by at least two subsystems according to some example embodiments of the present disclosure. The method shown in FIG. 2 may include steps 210 and 220.

Alternatively, in the method shown in FIG. 2, each of the at least two subsystems may include a first processor and a memory including a dedicated storage space corresponding to the first processor.

Alternatively, the first processor may be a central processor. The memory may be a double rate synchronous dynamic random-access memory. A part of the space can be reserved exclusively in the memory for the first processor; in the process of performing data operation in order to facilitate service processing, the part of the space can only allow the first processor to access (i.e., writing data and reading data), and the part of the space can serve as a dedicated storage space corresponding to the first processor. The magnitude of the dedicated storage space corresponding to the first processor can be configured according to actual requirements, and the present disclosure is not limited thereto.

Step 210: storing the first data to be processed into a dedicated storage space corresponding to each of the at least two subsystems.

Alternatively, each of the at least two subsystems may further include a peripheral module, etc.

Alternatively, for each of the at least two subsystems, the subsystem may acquire data collected by at least part of the sensors in the sensor device via a peripheral module, on this basis, the first processor may determine first data to be processed, and write the first data to be processed into a dedicated storage space corresponding to the subsystem. The dedicated storage space corresponding to the subsystem may be the dedicated storage space corresponding to the first processor in the subsystem.

Step 220: performing operations on first data to be processed in a corresponding dedicated storage space respectively by respective first processors of at least two subsystems; where any one of the first processors performs data access to the corresponding dedicated storage space during the operation.

Alternatively, for each of the at least two subsystems, the first data to be processed in the dedicated storage space corresponding to the subsystem may be operated on by the first processor in the subsystem, and during the operation, the required data may be read from the dedicated storage space corresponding to the subsystem, and the operated data to be stored may be written to the dedicated storage space corresponding to the subsystem.

Since the first processors in different subsystems respectively perform operations on the first data to be processed in the corresponding dedicated storage space, and perform data access to the corresponding dedicated storage space during the operation, it can be considered that the basic data (i.e., the first data to be processed) used in the operation of the different subsystems are independent from each other, and the used storage spaces are also independent from each other, then the operating processes of the different subsystems are also independent from each other and would not have an influence on each other, thereby ensuring that at least two subsystems in the chip are backed up with each other to achieve redundancy, which enables the chip to support high functional safety level services.

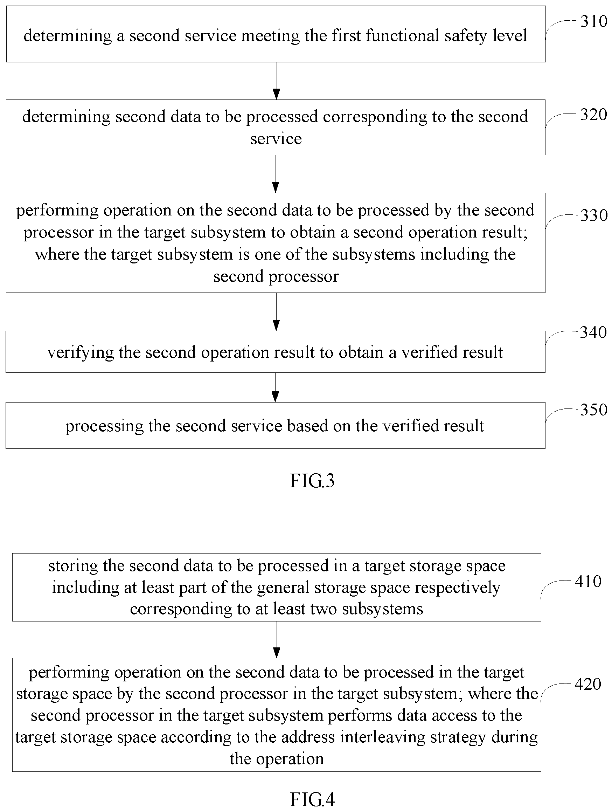

FIG. 3 is a schematic flow diagram showing a method for processing a service based on a chip according to further example embodiments of the present disclosure. The method as shown in FIG. 3 may include steps 310, 320, 330, 340, and 350.

Alternatively, in the method illustrated in FIG. 3, each of at least some of the at least two subsystems may include: a second processor.

Alternatively, each of at least some of the at least two subsystems may include: at least one second processor. Similar to the first processor, the second processor may also be a central processor.

At step 310: determining a second service meeting the first functional safety level.

Alternatively, the first functional safety level may be a lower functional safety level. For example, the first functional safety level may be ASIL-B.

It should be noted that, in the field of driving, there are a plurality of services related to the control of the travel state of a vehicle. The second service meeting the first functional safety level may be a service that requires lenient safety among a plurality of services related to the control of the travel state of the vehicle. For example, the second service may be a travel path planning service.

In some examples, the second service may also be referred to as a second task having the same functional safety level as that of at least two subsystems (i.e., at least two hardware units) in the chip.

In some embodiments, a processor (e.g., a second processor) may be pre-configured for the second service due to the low functional safety level of the second service.

Step 320: determining second data to be processed corresponding to the second service.

Alternatively, the second data to be processed corresponding to the second service may be data required to participate in the operation in order to support the second service. The second data to be processed corresponding to the second service may be data collected by at least part of the sensors in the sensor device. Alternatively, the second data to be processed corresponding to the second service is data obtained after performing certain data processing on data collected by at least part of the sensors in the sensor device.

In some examples, the second data to be processed corresponding to the second service can be determined by the second processor; for example, the second processor may receive data relating to the second service collected by at least some of the sensors in the sensor device.

Step 330: performing operation on the second data to be processed by the second processor in the target subsystem to obtain a second operation result; where the target subsystem is one of the subsystems including the second processor.

Alternatively, the number of subsystems including the second processor among the at least two subsystems may be more than one, and in particular which subsystem including the second processor is used as the target subsystem for assisting in processing the second service may be either pre-configured or determined by a software scheduling algorithm.

Alternatively, the target subsystem may be configured with second code data that may be used to characterize the operation logic corresponding to the second service (which will be subsequently referred to as the first operation logic for ease of illustration). As such, the target subsystem may run the second code data to perform operation on the second data to be processed according to the first operation logic to obtain a second operation result.

In one example, the second service is a travel path planning service, and an operation logic (i.e., a first operation logic) corresponding to the travel path planning service may be: sensing the environment around the vehicle to which the chip belongs based on the second data to be processed to obtain an environment sensing result; predicting the future position and behavior of obstacles based on the environmental sensing results, and planning a travel path for the vehicle to which the chip belongs based on the predicted future position and behavior of the obstacle, and the travel path can be used as a second operation result.

In some examples, after the second processor determines the second operation result, the second service may be processed based on the second operation result. For example, after the second processor determines the second operation result, an interrupt may be triggered to notify the first processor to read the second operation result in a memory (e.g., DDR) to process the second service. For another example, after the second processor determines the second operation result, the second operation result may be further verified to obtain a verified result, and then the second service is processed based on the verified result.

In step 340, verifying the second operation result to obtain a verified result.

Alternatively, in addition to determining a second service meeting the first functional safety level by executing step 310, a third service meeting the first functional safety level may be determined. The third service may be a service associated with the second service. For example, the second service is a travel path planning service, and the third service may be a service for determining whether the travel path obtained based on the travel path planning service is at risk of collision. Accordingly, the third data to be processed corresponding to the third service can be operated to obtain a third operation result.

In some examples, the verified result corresponding to the second operation result may be inferred by a verified result obtained by verifying the third operation result.

If the third operation result is used to indicate that collision occurs on the travel path, it may be determined that the verification of the second operation result does not pass , and a verified result characterizing that the verification of the second operation result does not pass may be obtained.

If the third operation result is used to indicate that no collision occurs on the travel path, it may be determined that the verification of the second operation result passes, and a verified result characterizing that the verification of the second operation result passes may be obtained.

Step 350: processing the second service based on the verified result.

In some alternative embodiments of the present disclosure, step 350 may include:
executing a service operation corresponding to the second service in response to the verified result characterizing that the verification of the second operation result passes;
   or
in response to the verified result characterizing that the verification of the second operation result does not pass, performing another operation on the second data to be processed by a second processor in the target subsystem to obtain a third operation result, and processing the second service based on the third operation result.

Alternatively, the target subsystem may be configured with, in addition to second code data for characterizing the first operation logic, third code data for characterizing another operation logic corresponding to the second service, different from the first operation logic (which may subsequently be referred to as second operation logic for ease of illustration). The second operation logic characterized by the third code data may be more conservative (e.g., more conducive to ensuring driving safety) than the first operation logic characterized by the second code data. In one example, both the second operation logic and the first operation logic may be implemented by an algorithm, and the algorithm used to implement the second operation logic may be more complex than the algorithm used to implement the first operation logic.

If the verified result characterizes that the verification of the second operation result passes, it can be determined that the rationality and reliability of the second operation result meet the requirements. Then, a service operation corresponding to the second service may be performed. For example, the second service may be a travel path planning service, and the service operation corresponding to the second service may be that the vehicle to which the control chip belongs travels based on the travel path obtained based on the travel path planning service.

If the verified result indicates that the verification of the second operation result does not pass, it can be determined that the rationality and reliability of the second operation result do not meet the requirements. Then, the target subsystem may run the third code data to operate on the second data to be processed based on the second operation logic to obtain a third operation result. The second service can be processed based on the third operation result.

In one example, the second service is a travel path planning service, the second operation result is a travel path L1, and the third operation result is a travel path L2. Since the operation logic for obtaining the travel path L2 is more conservative than the operation logic for obtaining the travel path L1, it can be considered that the travel path L2 has higher safety. Then, the vehicle on which the chip is located can be controlled to travel along the travel path L2.

As such, with reference to the verified result of the second operation result, the second service can be processed by a suitable processing method, which is beneficial to ensure the processing effect of services with a low functional safety level. For example, the driving safety of the vehicle on which the chip is located can be ensured by using a travel path with higher safety.

In some embodiments, after obtaining the third operation result, the third operation result may also be verified, and the second service may be processed based on the verified result of the third operation result.

In the embodiments of the present disclosure, for a second service meeting a first functional safety level, a second processor in a target subsystem in a chip can perform an operation on second data to be processed corresponding to the second service to obtain a second operation result, and based on the verified result of the second operation result, a suitable processing method is used to process the second service. For example, in a case where the verified result satisfies the requirements, a service operation corresponding to the second service may be performed to complete the second service. The second service is a low functional safety level service, and then, in the embodiments of the present disclosure, the chip can support the low functional safety level service. That is, in the embodiments of the present disclosure, in addition to being able to support a service with a high functional safety level, the chip is also able to support a service with a low functional safety level, and is applicable in a wide range and can better meet practical requirements.

FIG. 4 is a schematic flow diagram showing a method of performing operation on second data to be processed by a second processor in a target subsystem according to some example embodiments of the present disclosure. The method shown in FIG. 4 may include steps 410 and 420.

Alternatively, in the method shown in FIG. 4, each of the at least two subsystems may include a memory including a general storage space.

As introduced above, the memory may include a dedicated storage space corresponding to the first processor, and the remaining storage space in the memory may serve as a general storage space.

Step 410: storing the second data to be processed in a target storage space including at least part of the general storage space respectively corresponding to at least two subsystems.

Alternatively, the target subsystem may acquire data collected by at least some of the sensors in the sensor device via the peripheral module, on this basis, the second processor may determine second data to be processed and write the second data to be processed to the target storage space. The target storage space may include: all general storage space respectively corresponding to at least two subsystems. Alternatively, the target storage space may include part of the general storage space respectively corresponding to at least two subsystems. In order to facilitate understanding, the following description is made by taking the case where the target storage space includes all general storage spaces respectively corresponding to at least two subsystems as an example.

Alternatively, the second processor may write the second data to be processed based on an address interleaving strategy. It can be understood that the address interleaving strategy belongs to a dual-channel memory technology, and may involve two sets of memories; data access can be performed alternately on the two sets of memories; when data access is performed on one set of memories, the other set of memories can prepare for the next data access, so as to improve the access bandwidth and throughput rate.

In one example, at least two subsystems may be two subsystems, where a general storage space in one subsystem is represented as a general storage space K1, and a general storage space in the other subsystem is represented as a general storage space K2, then 128byte data of the second data to be processed can be written in the general storage space K1 first, then another 128byte data of the second data to be processed can be written in the general storage space K2, and then another 128byte data of the second data to be processed can be written in the general storage space K1, a further 128byte of the second data to be processed is then written in the general storage space K2, and so on, which will not be described again in detail herein.

Step 420: performing operation on the second data to be processed in the target storage space by the second processor in the target subsystem; where the second processor in the target subsystem performs data access to the target storage space according to the address interleaving strategy during the operation.

Alternatively, the second data to be processed in the target storage space may be operated on by a second processor in the target subsystem, during the operation, the required data may be read from the target storage space, and the data required to be stored resulting from the operation may be written to the target storage space. In the data access process of the target storage space, an address interleaving strategy can be used, and reference can be made specifically to the above description of the manner of writing the second data to be processed, which will not be described again in detail herein.

In the embodiments of the present disclosure, the second processor in the target subsystem can perform an operation on the second data to be processed in the target storage space, and during the operation, data access is performed on the target storage space based on the address interleaving strategy, so that the general storage space in different subsystems can be effectively used, which is beneficial to improve the data access bandwidth and satisfy the performance requirements of services with a low functional safety level.

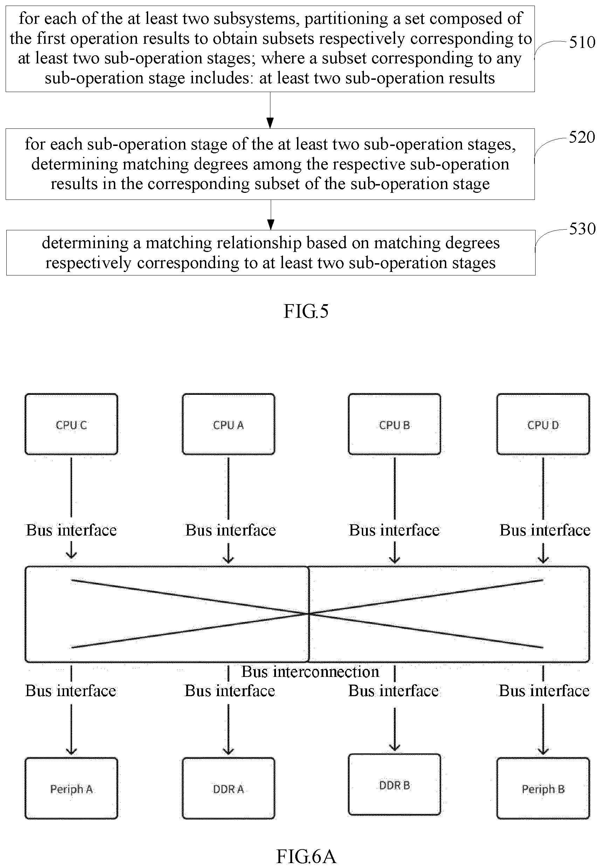

FIG. 5 is a schematic flow diagram showing a method of determining a matching relationship between respective first operation results of at least two subsystems according to some example embodiments of the present disclosure. The method shown in FIG. 5 may include steps 510, 520, and 530.

Alternatively, in the method shown in FIG. 5, the first operation result corresponding to each of the at least two subsystems may include: sub-operation results respectively corresponding to at least two sub-operation stages.

As described above, the first service may be a service that requires very strict safety among a plurality of services related to the control of the travel state of the vehicle. As an example, the first service may be an AEB service, and the operation logic corresponding to the AEB service can be: calculating a distance between the vehicle to which the chip belongs and the preceding vehicle based on the first data to be processed; determining a magnitude relationship between the distance and a preset safety distance as a first operation result. Then, the distance between the vehicle to which the calculation chip belongs and the preceding vehicle may be regarded as a sub-operation stage (for convenience of description, it may be subsequently referred to as a first sub-operation stage), and the distance may be taken as a sub-operation result corresponding to the first sub-operation stage. In addition, a magnitude relationship determined between the distance and the preset safe distance can be regarded as another sub-operation stage (for the convenience of description, it can be subsequently referred to as a second sub-operation stage), and the magnitude relationship can be used as a sub-operation result corresponding to the second sub-operation stage.

Step 510: for each of the at least two subsystems, partitioning a set composed of the first operation results to obtain subsets respectively corresponding to at least two sub-operation stages; where a subset corresponding to any sub-operation stage includes: at least two sub-operation results.

Illustratively, when partitioning a set of first operation results respectively corresponding to at least two sub-systems, MCU can partition the first operation results respectively corresponding to at least two sub-systems based on at least two sub-operation stages so as to obtain sub-operation results respectively corresponding to at least two sub-operation stages. The sub-operation result corresponding to each sub-operation stage can constitute a sub-set corresponding to the sub-operation stage.

Alternatively, the at least two subsystems may be two subsystems, where a first operation result corresponding to one subsystem may be represented as an operation result 1, and a first operation result corresponding to the other subsystem may be represented as an operation result 2. The operation result 1 may include: a sub-operation result A1 corresponding to the first sub-operation stage, and a sub-operation result A2 corresponding to the second sub-operation stage. The operation result 2 may include: a sub-operation result B1 corresponding to the first sub-operation stage, and a sub-operation result B2 corresponding to the second sub-operation stage. Then, a set of the operation result 1 and the operation result 2 may include: a sub-operation result A1, a sub-operation result A2, a sub-operation result B1, and a sub-operation result B2. By partitioning the set, a subset corresponding to the first sub-operation stage and a subset corresponding to the second sub-operation stage can be obtained. The subset corresponding to the first sub-operation stage may include: the sub-operation result A1 and the sub-operation result B1. The subset corresponding to the second sub-operation stage may include: the sub-operation result A2 and the sub-operation result B2.

In step 520, for each sub-operation stage of the at least two sub-operation stages, determining matching degrees among the respective sub-operation results in the corresponding subset of the sub-operation stage.

Illustratively, for each of the at least two sub-operation stages, the MCU may determine a similarity between the at least two sub-operation results corresponding to the sub-operation stage, i.e., a matching degree between the sub-operation results in the subset corresponding to the sub-operation stage.

Alternatively, for the first sub-operation stage, the similarity between the sub-operation result A1 and the sub-operation result B1 may be determined using a similarity algorithm, and the determined similarity may be used as a matching degree between the sub-operation result A1 and the sub-operation result B1. For the second sub-operation stage, the similarity between the sub-operation result A2 and the sub-operation result B2 may be determined using a similarity algorithm, and the determined similarity may be used as a matching degree between the sub-operation result A2 and the sub-operation result B2.

Step 530: determining a matching relationship based on matching degrees respectively corresponding to at least two sub-operation stages.

Alternatively, if the matching degree (e.g., similarity) respectively corresponding to the first sub-operation stage and the second sub-operation stage is greater than the preset matching degree, the matching relationship can be used to characterize that the operation result 1 and the operation result 2 satisfy the preset matching condition, i.e., the operation result 1 and the operation result 2 have a better consistency. As an example, the preset matching degree may be 80%, 85%, 90%, etc., which will not be enumerated here.

Alternatively, if the matching degree corresponding to at least one of the first sub-operation stage and the second sub-operation stage is less than or equal to the preset matching degree, the matching relationship may be used to characterize that the operation result 1 and the operation result 2 do not satisfy the preset matching condition, i.e., the operation result 1 and the operation result 2 do not have a good consistency.

Of course, the number of sub-operation stages is not limited to two, and may be, for example, three, four, or more than four, which will not be enumerated here. If the matching degree respectively corresponding to all the sub-operation stages is greater than the preset matching degree, the matching relationship can be used to represent that the first operation results respectively corresponding to at least two sub-systems satisfy the preset matching condition; otherwise, the matching relationship can be used for characterizing that the first operation results respectively corresponding to the at least two subsystems do not satisfy a preset matching condition.

In the embodiment of the present disclosure, in the process of determining the matching relationship, not only the sub-operation result obtained in the final stage but also the sub-operation result obtained in the intermediate stage can be referred to, and thus the data for determining the matching relationship is more abundant and diverse, which is beneficial to guarantee the rationality and reliability of the determined matching relationship.

In some embodiments, only the sub-operation results obtained in the final stage may be referred to in determining the matching relationship.

In some alternative examples, step 150 may include:
executing a service operation corresponding to a first service in response to a matching relationship characterizing that first operation results respectively corresponding to at least two subsystems satisfy a preset matching condition;
   or
executing a preset safety protection operation in response to the matching relationship characterizing that first operation results respectively corresponding to at least two subsystems do not satisfy a preset matching condition.

Alternatively, the service operation corresponding to the first service may be executed if the matching relationship is used for characterizing that the first operation results respectively corresponding to the at least two subsystems satisfy a preset matching condition. That is, when it is determined that the first operation results respectively corresponding to at least two hardware units satisfy a preset matching condition, the MCU indicates that each of first operation results has a better consistency, and then the MCU can control a corresponding actuator to execute a task operation corresponding to a first task. For example, the first service may be an AEB service and the service operation corresponding to the first service may be emergency braking.

Alternatively, if the matching relationship is used for characterizing that first operation results respectively corresponding to at least two subsystems do not satisfy a preset matching condition, a service operation corresponding to a first service may not be executed, and in addition, a preset safety protection operation may be executed. The preset safety protection operations may include, but are not limited to, prompting to take over the vehicle manually, pulling over, etc. That is, when it is determined that the first operation results respectively corresponding to at least two hardware units do not satisfy the preset matching condition, MCU indicates that the first operation results do not have good consistency, and then MCU can control the actuator to perform preset safety protection operations, such as manually taking over the vehicle and pulling over, so as to ensure the driving safety of the vehicle.

In the embodiments of the present disclosure, with reference to a matching relationship, it can be reasonably judged whether an abnormality exists in a service to be processed, and according to the judgement result, an appropriate processing method can be used to process a first service, on one hand, a service with a high functional safety level can be supported, and on the other hand, the safety of a vehicle to which a chip belongs can be ensured.

In some alternative examples, as shown in FIG. 6A, the chip may include: two subsystems meeting a functional safety level ASIL-B. Of the two subsystems, the one on the left may be referred to as a first subsystem and the other on the right may be referred to as a second subsystem. The first subsystem may include CPU A, CPU C, periph A, and DDR A. The second subsystem may include CPU B, CPU D, periph B, and DDR B. CPU A and CPU B may each serve as a first processor. CPU C and CPU D may each serve as a second processor. Periph A and Periph B can be each used as a peripheral module. DDR A and DDR B may each serve as a memory.

For any ASIL-D service, CPU A and CPU B can respectively operate on the data to be processed (e.g., the first data to be processed above) corresponding to the ASIL-D service according to an operation logic corresponding to the ASIL-D service. The operation results (e.g., the first operation result above) respectively corresponding to the CPU A and the CPU B have good consistency, and can execute a service operation corresponding to the ASIL-D service.

For any ASIL-B service, CPU C or CPU D can operate on the data to be processed (e.g., the second data to be processed above) corresponding to the ASIL-B service according to an operation logic corresponding to the ASIL-B service. An operation result (for example, the second operation result above) obtained by the CPU C or the CPU D is used to execute a service operation corresponding to the ASIL-B service based on the operation result.

In some examples, the chip may also include a controller (e.g., an MCU).

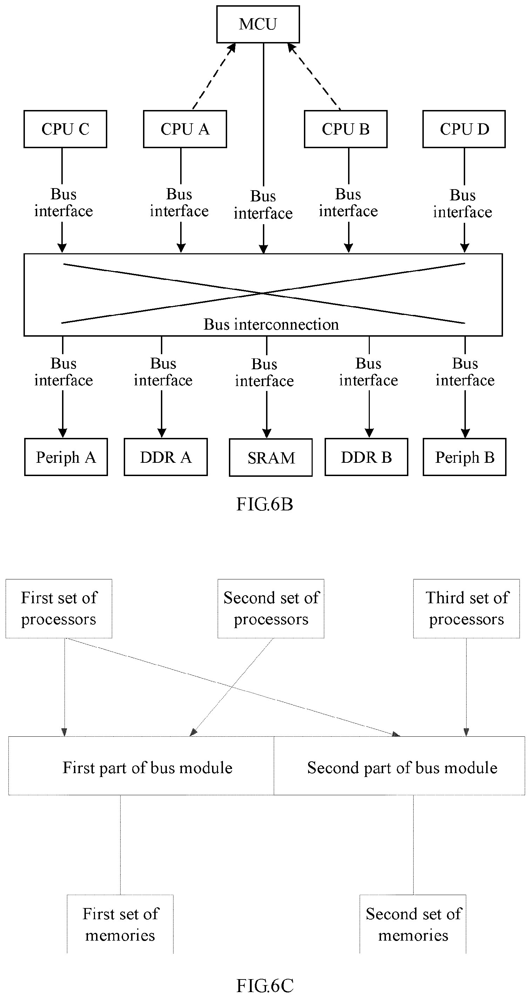

For any ASIL-D service, as shown in FIG. 6B, taking the controller as an example, CPU A can write the corresponding operation result into DDR A, and trigger an interrupt to notify the MCU to read the corresponding operation result in DDR A. CPU B may write the corresponding operation result to DDR B and trigger an interrupt to notify MCU to read the corresponding operation result in DDR B. MCU reads the operation results corresponding to CPU A and CPU B in DDR A and DDR B, respectively, and further determines a matching relationship between the operation results corresponding to CPU A and CPU B. If the MCU determines that the operation results (e.g., the first operation result above) respectively corresponding to the CPU A and the CPU B have good consistency, and can execute a service operation corresponding to the ASIL-D service.

As shown in FIG. 6B, taking the controller as an example of MCU, CPU A may write the corresponding operation result into SRAM, and trigger an interrupt to notify MCU to read the corresponding operation result in SRAM. CPU B may write the corresponding operation result to SRAM and trigger an interrupt to notify MCU to read the corresponding operation result in SRAM. MCU reads the operation results corresponding to CPU A and CPU B respectively in SRAM, and further determines a matching relationship between the operation results corresponding to CPU A and CPU B. If the MCU determines that the operation results (e.g., the first operation result above) respectively corresponding to the CPU A and the CPU B have good consistency, and can execute a service operation corresponding to the ASIL-D service.

For any ASIL-B service, CPU C or CPU D writes a corresponding operation result into a memory (e.g., DDR A or DDR B), and triggers an interrupt to notify CPU A and CPU B to read the operation result (e.g., the second operation result above) obtained by CPU C or CPU D in the memory.

Alternatively, DDR A may include a dedicated storage space Q1 and a general storage space K1. DDR B may include a dedicated storage space Q2 and a general storage space K2. For CPU A, data access may be made to only the dedicated storage space Q1 during data operations to facilitate service processing. For CPU B, data access may be made to only dedicated storage space Q2 during data operations to facilitate service processing. For CPU C, in the process of performing a data operation in order to facilitate service processing, the data can be accessed not only to the general storage space K1 but also to the general storage space K2. For CPU D, in the process of performing a data operation in order to facilitate service processing, the data can be accessed not only to the general storage space K1, but also to the general storage space K2.

In further alternative examples, as shown in FIG. 6C, the chip may include: a first set of processors, a second set of processors, a third set of processors, a first set of memories, a second set of memories, and a bus module. The first set of processors may be used to support ASIL-B services. The first set of processors may include at least one processor. The second set of processors and the third set of processors may cooperate to support ASIL-D services. The second set of processors and the third set of processors may each include at least one processor. The first set of memories and the second set of memories may each include at least one memory.

As an example, the first set of processors may include two CPUs, such as CPU C or CPU D in FIG. 6A. The second set of processors may include a CPU, such as CPU A in FIG. 6A. The third set of processors may include a CPU, such as CPU B in FIG. 6A. The first set of memories may include one or more DDRs, such as DDR A in FIG. 6A. The second set of memories may include one or more DDRs, such as DDR B in FIG. 6A.

Alternatively, both the first set of memories and the second set of memories may include a dedicated storage space and a general storage space. The address range of the dedicated storage space in the first set of memories may be denoted Address range A and the address range of the general storage space in the first set of memories may be denoted as Address range B. The address range of the general storage space in the second set of memories may be denoted Address range A and the address range of the dedicated storage space in the second set of memories may be denoted as Address range C.

For the ASIL-B service, the first set of processors can perform data access to the Address range A in the first set of memories and the Address range A in the second set of memories via the bus module, so that the first set of processors can obtain all the bus bandwidth resources and all the memory resources, facilitating high-performance operations.

For an ASIL-D service, a second set of processors can perform data access on the Address range B via a first part of the bus module, and the third set of processors can perform data access on the Address range C via a second part of the bus module, so that the second set of processors can obtain part of the bus bandwidth resource and part of the storage resource, and the third set of processors can also obtain part of the bus bandwidth resource and part of the storage resource; and the bus bandwidth resources obtained by the second set of processors and the bus bandwidth resources obtained by the third set of processors may originate from different hardware paths, and the memory resources obtained by the second set of processors and the memory resources obtained by the third set of processors may originate from different memory banks, so as to facilitate the second set of processors and the third set of processors to make backup with each other for realizing redundancy.

In some examples, the chip may further include an MCU (not shown in FIG. 6C), and the MCU may read the operation results determined by the second set of processors and the third set of processors in a memory (for example, the MCU may read the operation results determined by the second set of processors and the third set of processors in an Address range B and an Address range C, respectively); the MCU can match the operation results determined by the second set of processors and the third set of processors to obtain a matching relationship, and further perform corresponding processing on the ASIL-D service according to the matching relationship.

In summary, with the embodiments of the present disclosure, the requirements of the ASIL-D service can be satisfied by two independent pieces of ASIL-B hardware, and thus a relatively complex ASIL-D service can be supported by using the great cost of the ASIL-B hardware, and in addition, the performance requirements of the ASIL-B service can also be better satisfied.

### Example apparatus

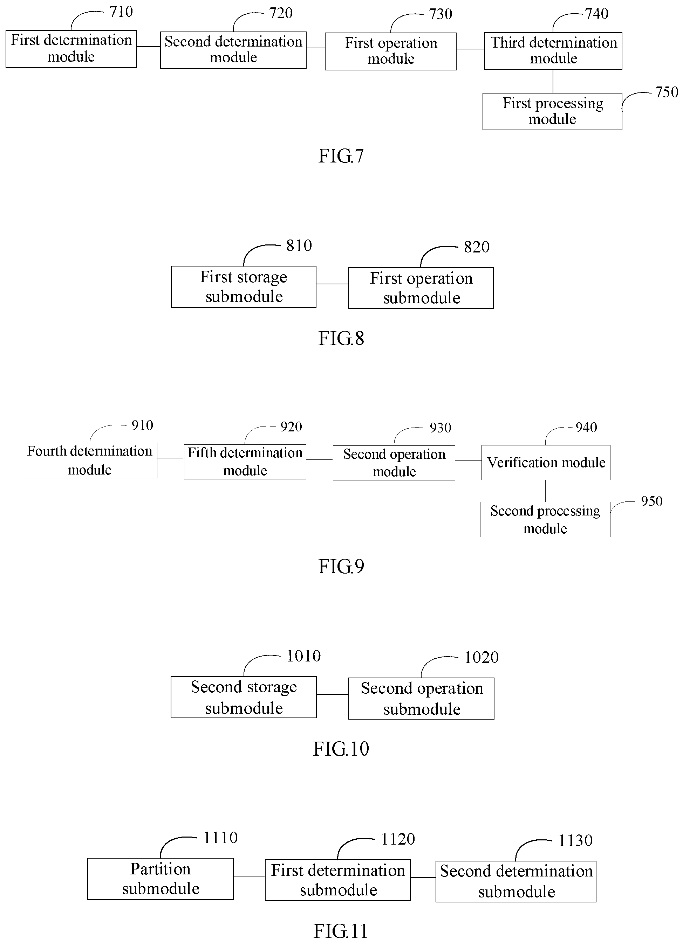

FIG. 7 is a schematic structural diagram of an apparatus for processing a service based on a chip according to some example embodiments of the present disclosure. The chip may include at least two subsystems meeting a first functional safety level. The apparatus shown in FIG. 7 may include:
a first determination module 710 configured to determine a first service meeting a second functional safety level having a level higher than that of the first functional safety level;
a second determination module 720 configured to determine first data to be processed corresponding to the first service determined by the first determination module 710;
a first operation module 730 configured to respectively performing operation on the first data to be processed determined by the second determination module 720 via the at least two subsystems to obtain first operation results respectively corresponding to the at least two subsystems;
a third determination module 740 configured to determine a matching relationship among the first operation results respectively corresponding to the at least two subsystems obtained by the first operation module 730; and
a first processing module 750 configured to process the first service determined by the first determination module 710 based on the matching relationship determined by the third determination module 740.

In some alternative examples, the first processing module 750 includes:
a first processing sub-module configured to execute a service operation corresponding to a first service in response to a matching relationship determined by a third determination module 740 characterizing that the first operation results respectively corresponding to at least two sub-systems satisfy a preset matching condition;
   or
a second processing sub-module configured to execute a preset safety protection operation in response to the matching relationship determined by the third determination module 740 characterizing that first operation results respectively corresponding to at least two sub-systems do not satisfy a preset matching condition.

In some alternative examples, each of the at least two subsystems include a first processor and a memory including a dedicated storage space corresponding to the first processor;
as shown in FIG. 8, the first operation module 730 includes:
a first storage sub-module 810 configured to store the first data to be processed determined by the second determination module 720 into respective dedicated storage spaces corresponding to the at least two subsystems;
a first operation sub-module 820 configured to respectively perform operations on first data to be processed stored into the respective dedicated storage spaces by the first storage sub-module 810 by respective first processors of at least two subsystems respectively; wherein any one of the first processors performs data access on the respective dedicated storage space during the operation.

In some alternative examples, each of at least some of the at least two subsystems includes a second processor;
as shown in FIG. 9, the embodiments of the present disclosure provide an apparatus including:
a fourth determination module 910 configured to determine a second service meeting the first functional safety level;
a fifth determination module 920 configured to determine second data to be processed corresponding to the second service determined by the fourth determination module 910;
a second operation module 930 configured to perform operation on the second data to be processed determined by the fifth determination module 920 by the second processor in the target subsystem to obtain a second operation result; wherein the target subsystem is one subsystem of various subsystems including the second processor;
a verification module 940 configured to verify the second operation result obtained by the second operation module 930 to obtain a verified result;

The second processing module 950 is configured to process the second service based on the verified result obtained by the verification module 940.

In some alternative examples, each of the at least two subsystems includes a memory including general storage space;
As shown in FIG. 10, the second operation module 930 includes:
a second storage sub-module 1010 configured to store the second data to be processed determined by the fifth determination module 920 in a target storage space; wherein the target storage space includes general storage space respectively corresponding to at least two subsystems;
a second operation sub-module 1020 configured to perform operation on second data to be processed stored in the target storage space by the second storage sub-module 1010 by the second processor in the target subsystem; wherein the second processor in the target subsystem performs data access to the target storage space based on the address interleaving strategy during the operation.

In some alternative examples, the second processing module 950 includes:
a third processing sub-module configured to execute a service operation corresponding to a second service in response to the verified result obtained by the verification module 940 representing that the verification of the second operation result passes;
   or
a fourth processing sub-module configured to perform another operation on the second data to be processed by a second processor in the target sub-system to obtain a third operation result in response to the verified result obtained by the verification module 940 characterizing that the verification of the second operation result does not pass, and process the second service based on the third operation result.

In some alternative examples, the first operation result corresponding to each of the at least two subsystems include: sub-operation results respectively corresponding to at least two sub-operation stages;
as shown in FIG. 11, a third determination module 740 includes:
a partition sub-module 1110 configured to partition, for each of at least two subsystems, a set composed of the first operation results obtained by the first operation module 730 to obtain subsets respectively corresponding to at least two sub-operation stages; wherein a subset corresponding to any sub-operation stage includes at least two sub-operation results;
a first determination sub-module 1120 configured to, for each sub-operation stage of the at least two sub-operation stages, determine matching degrees among the respective sub-operation results in the corresponding subset of the sub-operation stage; and
a second determination sub-module 1130 configured to determine a matching relationship based on the matching degrees respectively corresponding to at least two sub-operation stages determined by the first determination sub-module 1120.

In the apparatus of the present disclosure, various alternative embodiments, alternative embodiments and alternative examples disclosed above can be flexibly selected and combined as necessary to realize corresponding functions and effects, and the present disclosure is not intended to be enumerated here.

### Example electronic device

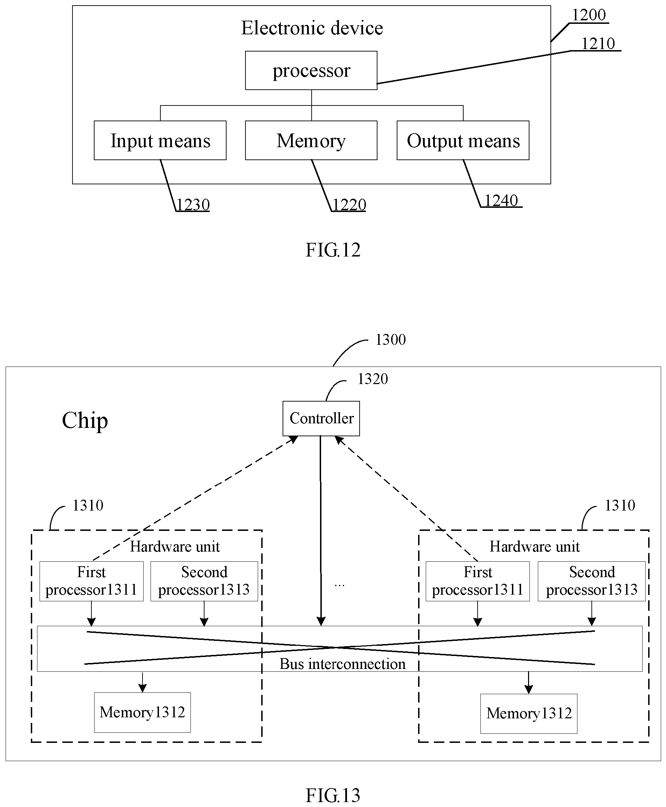

FIG. 12 is a block diagram of an electronic device provided by some embodiments of the present disclosure, the electronic device 1200 including one or at least one processor 1210 and memory 1220.

The processor 1210 may be a central processing unit (CPU) or other form of processing unit having data processing capabilities and/or instruction execution capabilities, and may control other components in the electronic device 1200 to execute desired functions.

The storage 1220 may include one or more computer program products, which may include various forms of computer-readable storage media, such as volatile memory and/or non-volatile memory. The volatile memory may for example include a random-access memory (RAM) and/or a cache memory (cache) etc. The non-volatile memory may include, for example, a read only memory (ROM), a hard disk, a flash memory, etc. One or more computer program instructions may be stored on a computer-readable storage medium, and the processor 1210 may run one or more computer program instructions to perform the methods and/or other desired functions of the various embodiments of the present disclosure above.

In one example, the electronic device 1200 may further include: input means 1230 and output means 1240, which are interconnected by a bus system and/or other form of connection mechanism (not shown).

The input means 1230 may also include, for example, a keyboard, a mouse, various types of sensors, a touch screen, etc.

The output means 1240 may output various information to the outside, which may include, for example, a display, a speaker, a printer, and a communication network and its connected remote output devices, etc.

Of course, for simplicity, only some of the components of the electronic device 1200 relevant to the present disclosure are shown in FIG. 12, omitting components such as buses, input/output interfaces, etc. In addition, the electronic device 1200 may include any other suitable components depending on the particular application.

FIG. 13 is a block diagram of a chip provided by some embodiments of the present disclosure. As shown in FIG. 13, a chip 1300 includes at least two hardware units 1310 meeting a first functional safety level, and a controller 1320.

The at least two hardware units 1310 are respectively configured for determining a first task meeting a second functional safety level and first data to be processed corresponding to the first task; wherein the level of the second functional safety level is higher than the level of the first functional safety level.

The at least two hardware units 1310 are respectively configured for performing operations on the first data to be processed to obtain first operation results respectively corresponding to the at least two hardware units 1310.

The controller 1320 is configured for determining a matching relationship between the first operation results respectively corresponding to the at least two hardware units 1310, and processing the first task based on the matching relationship.

Illustratively, the controller 1320 executes a task operation corresponding to a first task in response to a matching relationship characterizing that first operation results respectively corresponding to at least two hardware units 1310 satisfy a preset matching condition; or the controller 1320 executes the preset safety protection operation in response to the matching relationship characterizing that the first operation results respectively corresponding to the at least two hardware units 1310 do not satisfy the preset matching condition.

In some examples, as shown in FIG. 13, each hardware unit 1310 of the at least two hardware units 1310 includes: a first processor 1311 and a memory 1312, where the memory 1312 includes: a dedicated storage space corresponding to the first processor 1311. The first processor 1311 is configured for storing first data to be processed into a dedicated storage space; performing operations on first data to be processed into a dedicated storage space corresponding to the first processor 1311; wherein the first processor 1311 performs data access to a corresponding dedicated storage space during an operation.

In some examples, some of the at least two hardware units 1310 may include a second processor 1313, and another part of the hardware units may not include the second processor 1313; it is also possible that each hardware unit 1310 of the at least two hardware units 1310 includes a second processor 1313, which is not limited by the embodiments of the present disclosure.

As shown in FIG. 13, at least one hardware unit 1310 includes a second processor 1313.

The second processor 1313 is configured for determining a second task meeting the first functional safety level and second data to be processed corresponding to the second task; performing operations on the second data to be processed to obtain a second operation result; and processing the second task based on the second operation result.

In some examples, the second processor 1313, after determining the second operation result, may write the second operation result to the memory 1312 and trigger an interrupt to inform the first processor 1311 to read the second operation result in the memory 1312 to process the second task.

In some examples, the processing the second task based on the second operation result may include: verifying the second operation result to obtain a verified result, and executing the second task based on the verified result.

Illustratively, a task operation corresponding to the second task is executed in response to the verified result characterizing that the verification of the second operation result passes; or the second data to be processed is operated on by the second processor based on the second operation logic to obtain a third operation result in response to the verified result characterizing that the verification of the second operation result does not pass, and the second task is processed based on the third operation result.

In some examples, the memory 1312 in each hardware unit 1310 includes general storage space.

The second processor 1313 is configured for storing second data to be processed in a target storage space including at least part of the general storage space corresponding to at least two hardware units 1310 respectively.

The second processor 1313 is configured for performing, by the second processor, an operation on the second data to be processed in the target storage space based on a first operation logic; wherein the second processor 1313 performs data access to the target storage space based on an address interleaving strategy during an operation.

In some examples, the first operation result for each hardware unit 1310 of the at least two hardware units 1310 includes sub-operation results respectively corresponding to at least two sub-operation stages.

The controller 1320 is configured for partitioning first operation results respectively corresponding to at least two hardware units 1310 according to at least two sub-operation results respectively corresponding to at least two sub-operation stages; for each sub-operation stage of the at least two sub-operation stages, determining a similarity between sub-operation result of the at least two sub-operation results respectively corresponding to the at least two hardware units; and determining a matching relationship based on the similarity for each of the at least two sub-operation stages.

Example computer program product and computer-readable storage medium

In addition to the methods and device described above, the embodiments of the present disclosure may also be a computer program product including computer program instructions which, when executed by a processor, cause the processor to execute steps in methods according to various embodiments of the present disclosure as described in the "Example Methods" section of this specification.

The computer program product may written into program codes for executing operations for embodiments of the present disclosure in any combination of one or more programming languages, including an object-oriented programming language such as Java, C++ or the like and conventional procedural programming languages, such as the "C" programming language or similar programming languages. The program code may execute entirely on the user computing device, partially on the user device, as a stand-alone software package, partially on the user computing device, partially on a remote computing device, or entirely on the remote computing device or server.

Furthermore, embodiments of the present disclosure may also be a computer-readable storage medium having stored thereon computer program instructions which, when executed by a processor, cause the processor to execute the steps in the methods of the various embodiments of the present disclosure described in the "Example Methods" section in the specification above.

The computer-readable storage medium may take any combination of one or more readable media. The readable medium may be a readable signal medium or a readable storage medium. The readable storage medium can be, for example but not limited to, an electronic, magnetic, optical, electromagnetic, infrared, or semiconductor system, apparatus, or component, or a combination of any of the foregoing. More specific examples (a non-exhaustive list) of the readable storage medium include: an electrical connection having one or more wires, a portable computer diskette, a hard disk, a Random-access Memory (RAM), a read-only memory (ROM), an Erasable Programmable Read-only Memory (EPROM or flash memory), an optical fiber, a portable Compact Disk Read-only Memory (CD-ROM), an optical storage component, a magnetic storage component, or any suitable combination thereof.

The general principles of the present disclosure have been described above in conjunction with specific embodiments, however, the advantages, superiorities, effects, etc. mentioned in the present disclosure are merely example and not limiting, and such advantages, superiorities, effects, etc. must not be construed as being required by the various embodiments of the present disclosure. The particular details disclosed above are for purposes of illustration and description only and are not intended to be limiting, as the present disclosure is not limited to the particular details disclosed above.

Various modifications and alterations to the present disclosure may be made by a person skilled in the art without departing from the spirit and scope of the present application. Thus, in case the modifications and variations of the present application are within the scope of the claims and their equivalents, it is intended that the modifications and variations are included in the present disclosure.

## Claims

1. A method for processing a service based on a chip, the chip comprising at least two subsystems meeting a first functional safety level, the method comprising:
determining a first service meeting a second functional safety level having a level higher than that of the first functional safety level;
determining first data to be processed corresponding to the first service;
performing operations on the first data to be processed by the at least two subsystems, respectively, to obtain first operation results respectively corresponding to the at least two subsystems;
determining a matching relationship between the first operation results respectively corresponding to the at least two subsystems; and
processing the first service based on the matching relationship.

2. The method according to claim 1, wherein the processing the first service based on the matching relationship comprises:
executing a service operation corresponding to the first service in response to the matching relationship characterizing that the first operation results respectively corresponding to the at least two subsystems satisfy a preset matching condition;
or
executing a preset safety protection operation in response to the matching relationship characterizing that the first operation results respectively corresponding to the at least two subsystems do not satisfy a preset matching condition.

3. The method according to claim 1, wherein each of the at least two subsystems comprises a first processor and a memory comprising a dedicated storage space corresponding to the first processor;
the performing operations on the first data to be processed by the at least two subsystems, respectively, comprises:
storing the first data to be processed in the respective dedicated storage spaces corresponding to the at least two subsystems; and
performing operations on the first data to be processed in the respective dedicated storage spaces via the respective first processors of the at least two subsystems respectively; wherein any one of the first processors performs data access to the respective dedicated storage space during the operation.

4. The method according to claim 1, wherein at least one of the subsystems comprises a second processor;
the method further comprises:
determining a second service meeting the first functional safety level;
determining second data to be processed corresponding to the second service;
performing operation on the second data to be processed by the second processor to obtain a second operation result; and
processing the second service based on the second operation result.

5. The method according to claim 4, wherein each of the at least two subsystems comprises a memory comprising general storage space;
the performing operation on the second data to be processed by the second processor comprises:
storing the second data to be processed in a target storage space comprising at least part of the general storage space respectively corresponding to the at least two subsystems; and
performing, by the second processor, an operation on the second data to be processed in the target storage space based on a first operation logic, wherein the second processor performs data access to the target storage space based on an address interleaving strategy during the operation.

6. The method according to claim 4, wherein the processing the second service based on the second operation result comprises:
verifying the second operation result to obtain a verified result; and
executing a service operation corresponding to the second service in response to the verified result characterizing that the verification of the second operation result passes;
or
in response to the verified result characterizing that the verification of the second operation result does not pass, performing, by the second processor, an operation on the second data to be processed based on a second operation logic to obtain a third operation result, and processing the second service based on the third operation result.

7. The method according to any one of claims 1-6, wherein the first operation result corresponding to each of the at least two subsystems comprises sub-operation results respectively corresponding to at least two sub-operation stages;
the determining the matching relationship between the first operation results respectively corresponding to the at least two subsystems comprises:
for each of the at least two subsystems, partitioning the first operation result based on the at least two sub-operation stages to obtain the sub-operation results respectively corresponding to the at least two sub-operation stages;
for each of the at least two sub-operation stages, determining a similarity between the at least two sub-operation results respectively corresponding to the at least two subsystems; and
determining the matching relationship based on the similarity for each of the at least two sub-operation stages.

8. A chip, comprising:
a controller (1320), and
at least two subsystems (1310) meeting a first functional safety level;
wherein each of the at least two subsystems (1310) is configured for determining a first service meeting a second functional safety level having a level higher than that of the first functional safety level and first data to be processed corresponding to the first service, and configured for performing operation on the first data to be processed to obtain a first operation result; and
wherein the controller (1320) is configured for determining a matching relationship between the first operation results respectively corresponding to the at least two subsystems, and processing the first service based on the matching relationship.

9. The chip according to claim 8, wherein the controller (1320) is configured for:
executing a service operation corresponding to the first service in response to the matching relationship characterizing that the first operation results respectively corresponding to the at least two subsystems satisfy a preset matching condition;
or
executing a preset safety protection operation in response to the matching relationship characterizing that the first operation results respectively corresponding to the at least two subsystems do not satisfy a preset matching condition.

10. The chip according to claim 8, wherein each of the at least two subsystems (1310) comprises a first processor (1311) and a memory (1312) comprising a dedicated storage space corresponding to the first processor, and the first processor (1311) is configured for:
storing the first data to be processed in the dedicated storage space; and
performing operation on the first data to be processed in the dedicated storage space corresponding to the first processor, and
wherein the first processor (1311) performs data access to the corresponding dedicated storage space during the operation.

11. The chip according to claim 8, wherein at least one of the subsystems comprises, a second processor (1313), and the second processor (1313) is configured for:
determining a second service meeting the first functional safety level and second data to be processed corresponding to the second service;
performing operation on the second data to be processed to obtain a second operation result; and
processing the second service based on the second operation result.

12. The chip according to claim 11, wherein each of the at least two subsystems comprises a memory (1312) comprising general storage space, and the second processor (1313) is configured for:
storing the second data to be processed in a target storage space comprising at least part of the general storage space respectively corresponding to the at least two subsystems; and
performing an operation on the second data to be processed in the target storage space based on a first operation logic, and
wherein the second processor (1313) performs data access to the target storage space based on an address interleaving strategy during the operation.

13. The chip according to any one of claims 8-12, wherein the first operation result corresponding to each of the at least two subsystems comprises sub-operation results respectively corresponding to at least two sub-operation stages, and the controller (1320) is configured for:
for each of the at least two subsystems, partitioning the first operation result based on the at least two sub-operation stages to obtain the sub-operation results respectively corresponding to the at least two sub-operation stages;
for each of the at least two sub-operation stages, determining a similarity between the at least two sub-operation results respectively corresponding to the at least two subsystems; and
determining the matching relationship based on the similarity for each of the at least two sub-operation stages.

14. A computer-readable storage medium storing thereon a computer program for executing the method for processing a service based on a chip according to any one of claims 1-7.

15. An electronic device, comprising:
a processor (1210); and
a memory (1220) for storing processor-executable instructions,
wherein the processor is configured for reading the executable instructions from the memory and executing the instructions to implement the method for processing a service based on a chip according to any one of claims 1-7.
